# EUROPÄISCHE PATENTSCHRIFT

(11) **EP 2 191 129 B1**
(45) Veröffentlichungstag und Bekanntmachung des Hinweises auf die Patenterteilung: **11.05.2011**
(21) Anmeldenummer: 08801161.4
(22) Anmeldetag: 14.08.2008
(51) Int. Cl.: F03B 17/06, F03D 3/06

(54) **ROTATIONSVORRICHTUNG**
ROTATION DEVICE
DISPOSITIF DE ROTATION

(30) Priorität: 17.08.2007 DE 102007038945
(43) Veröffentlichungstag der Anmeldung: 02.06.2010
(73) Patentinhaber: Aquapower GmbH - erneuerbare Energie aus Wasserkraft, 55481 Rödern (Hunsrück) (DE)
(72) Erfinder: SCHIEL, Hans-Josef, 55481 Lindenschied (DE)
(74) Vertreter: Seitz, Ralf Hans Frank
(86) Internationale Anmeldenummer: PCT/DE2008/001338
(87) Internationale Veröffentlichungsnummer: WO 2009/024127

(56) Entgegenhaltungen:
- EP-A- 0 008 590
- DE-A1- 19 603 982
- DE-A1-102004 012 703
- DE-A1-102006 002 137
- US-A- 1 408 988

## Beschreibung

Die Erfindung betrifft eine Rotationsvorrichtung zur Verwendung in einem Fluid zum Zweck der Energiegewinnung aus der Strömungsbewegung eines Fluids oder zum Zweck der Umwandlung von Energie in eine Bewegung eines Fluids.

Mittels der Rotationsvorrichtung der Erfindung oder ähnlichen Vorrichtungen kann Energie aus einem strömenden Fluid, das ein Gas oder eine Flüssigkeit sein kann, z.B. Wind oder Wasser, durch Anordnen der Rotationsvorrichtung in dem Fluid gewonnen werden, wie es z.B. auch bei einer Turbine der Fall ist. Umgekehrt kann, indem die Rotationsvorrichtung in Bewegung durch einen extra Antrieb versetzt wird, die Strömungsbewegung eines Fluids erzeugt werden.

Die Druckschrift DE 10 2006 002137, die als nächstliegenden Stand der Technik augesehen wird, offenbart die Merkmale des Oberbegriffs des Anspruchs 1.

Eine bekannte Rotationsvorrichtung ist in WO 2007/082506 beschrieben, bei der zur Kraftkopplung zwischen dem Fluid und der Rotationsvorrichtung zwei Flügel oder Blätter bzw. Schaufeln verwendet werden, deren Stellung relativ zur Strömungsrichtung des Fluids über einen Antrieb eingestellt wird, der ein Pendelzahnrad, zwei Zwischenzahnräder, die in das Pendelzahnrad eingreifen, und zwei Flügeldrehachsenzahnräder aufweist, die jeweils in ein Zwischenzahnrad eingreifen. Das Pendelzahnrad kann sich bei der Einstellung der Flügelstellung auf einer Zentralachse der Rotationsvorrichtung frei drehen. Es ist also mit der Zentralachse nicht fest verbunden. Durch den bekannten Pendelradantrieb können zwei und mehr Flügel nur örtlich synchron zueinander eingestellt werden. Eine unabhängige Einstellung der einzelnen Flügel relativ zu der Strömungsrichtung des Fluids ist mit dem bekannten Pendelradantrieb deshalb nicht möglich.

Die Aufgabe der Erfindung besteht deshalb darin, eine Rotationsvorrichtung mit einem Pendelradantrieb anzugeben, der die unabhängige Einstellung der Flügelstellungen relativ zu der Strömungsrichtung eines Fluids ermöglicht.

Diese Aufgabe wird durch die Rotationsvorrichtung der Erfindung gemäß Anspruch 1 gelöst. Demnach hat die Rotationsvorrichtung, die in einem Fluid verwendet wird, um Energie aus der Strömungsbewegung eines Fluids zu gewinnen oder um Energie in eine Bewegung eines Fluids umzuwandeln, eine Hauptdreheinrichtung bzw. einen Hauptkörper, die bzw. der mit einer zentralen Drehachse der Rotationsvorrichtung fest verbunden ist, ein oder mehreren Drehflächen oder Rotorblätter, die drehbar um ihre Drehflächenachsen bzw. Rotorblätterachsen mit Abstand zu der zentralen Drehachse derart mit der Hauptdreheinrichtung gekoppelt sind, dass die Hauptdreheinrichtung durch mindestens eine Drehfläche oder durch mehrere Drehflächen eine Drehbewegung um die zentrale Drehachse ausführen kann, wobei sich die Drehflächenachsen parallel zu der zentralen Drehachse der Hauptdreheinrichtung erstrecken und wobei eine Pendeleinrichtung bzw. Steuereinrichtung zum Steuern oder Einstellen der Stellung der Drehfläche oder Drehflächen relativ zu einer Strömungsrichtung des Fluids vorgesehen ist, die für jede Drehfläche eine Stellhülse und/oder einen Stellrahmen hat, wobei die Stellhülse und/oder der Stellrahmen um die zentrale Drehachse herum frei drehbar angeordnet ist, aber nicht starr oder kraftschlüssig mit der zentralen Drehachse radial verbunden ist, und mit der zugeordneten Drehfläche gekoppelt ist, um ihre Pendelbewegung oder Bewegung auf die Drehfläche zum Einstellen der Drehfläche zu übertragen.

Mit der soeben beschriebenen Pendeleinrichtungen können somit die Stellungen von mehreren Drehflächen unabhängig voneinander eingestellt werden, um einen optimalen Wirkungsgrad der Rotationsvorrichtung erreichen zu können. Die Stellhülsen oder Stellrahmen können dabei in verschachtelter Weise frei drehbar um die Zentralachse der Rotationsvorrichtung der Erfindung herum angeordnet sein, wodurch ein kompakter Aufbau der Rotationsvorrichtung erreicht wird. Der kompakte Aufbau stellt nur eine geringe Störung des strömenden Fluids dar und vermeidet Unwuchten bei der Drehung der Rotationsvorrichtung der Erfindung.

Die Stelleinrichtung kann eine Steuernocke oder auch mehrere Steuernocken oder eine Steuerkurve oder mehrere Steuerkurven, der bzw. die fest mit der zentralen Drehachse der Hauptdreheinrichtung gekoppelt ist bzw. sind, und einen Antrieb haben, der mit dem Steuernocken bzw. der Steuerkurve und der Drehfläche oder den Drehflächen gekoppelt ist und die Bewegung des Steuernockens oder der Steuerkurve in eine Drehbewegung der Drehfläche bzw. Drehflächen zum Einstellen des Winkels der Drehflächen zur Strömungsrichtung des Fluids umsetzt. Durch diesen Aufbau wird eine zuverlässige und genaue Einstellung der Lage der Drehflächen erreicht.

In Alternative kann die Stelleinrichtung einen elektrischen oder elektromotorischen Antrieb haben, der mit der Drehfläche bzw. den Drehflächen gekoppelt ist und in Abhängigkeit von der Drehposition der Hauptdreheinrichtung den Winkel der Drehfläche bzw. der Drehflächen einstellt.

Die Pendeleinrichtung der Erfindung hat bevorzugt einen Steuernocken, der fest mit der zentralen Drehachse der Hauptdreheinrichtung und der Stellhülse oder dem Stellrahmen gekoppelt ist und seine Bewegung in eine Drehbewegung der zugeordneten Drehfläche überträgt.

Die Pendeleinrichtung kann einen elektrischen Antrieb haben, der in Abhängigkeit von der Drehposition der Hauptdreheinrichtung den Winkel der Drehfläche über die zugehörige Stellhülse oder den zugehörigen Stellrahmen einstellt.

Die Pendeleinrichtung kann zudem über die Stellhülse oder den zugeordneten Stellrahmen eine neutrale Stellung der zugeordneten Drehfläche bezüglich der Strömungsrichtung einstellen, in der die Drehfläche auf die Hauptdreheinrichtung kein Drehmoment ausübt.

Bevorzugt ist ein Pendelrad bzw. ein Pendelzahnrad vorgesehen, das frei drehbar gelagert ist, aber nicht starr oder kraftschlüssig mit der zentralen Drehachse radial verbunden ist, und das über einen Antrieb oder ein Getriebe mit der zugeordneten Drehfläche gekoppelt ist.

Die Pendeleinrichtung bzw. Stelleinrichtung kann eine Steuerkurve haben, die auf der zentralen Drehachse vorgesehen ist.

Bevorzugt sind mehrere Drehflächen und gleichviele Stellhülsen und/oder Stellrahmen vorgesehen sind, wobei jeweils eine Drehfläche mit einer jeweils zugeordneten Stellhülse oder einem jeweils zugeordneten Stellrahmen gekoppelt ist.

Weiterhin können mehrere Drehflächen und gleichviele Pendelräder vorgesehen sein, wobei jeweils eine Drehfläche mit einem jeweils zugeordneten Pendelrad gekoppelt ist.

Bevorzugt sind mehrere Drehflächen und gleichviele Stellglieder vorgesehen, wobei jeweils eine Drehfläche mit einem jeweils zugeordneten Stellglied gekoppelt ist.

Es können mehrere Drehflächen und gleichviele Steuerkurven vorgesehen sein, wobei jeweils eine Drehfläche mit einer jeweils zugeordneten Steuerkurve gekoppelt ist.

Bevorzugt sind vielzählige, zylindrische Stellhülsen oder Stellrahmen ineinander verschachtelt um die zentrale Drehachse herum angeordnet, um einen kompakten Aufbau der Rotationsvorrichtung der Erfindung erreichen zu können.

Die Stellung der jeweiligen Drehfläche zur Strömungsrichtung des Mediums bzw. Fluids kann derart durch die Pendeleinrichtung bzw. Steuereinrichtung eingestellt werden, dass eine Relativgeschwindigkeit zwischen dem strömenden Fluid und der jeweiligen Drehfläche konstant ist oder auf der Umlaufbahn optimal eingestellt wird, wodurch ein optimales Drehmoment erreicht werden kann.

Eine bevorzugte Rotationsvorrichtung der Erfindung ist derart aufgebaut, dass zwischen einer Stellhülse und der dazu benachbarten zentralen Drehachse (M) ein Abstand oder Freiraum eingehalten ist und dass auch zwischen benachbarten Stellhülsen ein Abstand oder Freiraum eingehalten ist, um Reibungsprobleme und Toleranzprobleme zwischen den Stellhülsen und der zentralen, durchgehenden Drehachse zu vermeiden.

Der Stellrahmen gemäß einer bevorzugten Ausführungsform der Pendeleinrichtung der Erfindung kann mehrere parallel zueinander angeordnete Ringe oder Scheiben und mehrere Stäbe aufweisen, die sich zwischen den Ringen oder Scheiben erstrecken, wodurch eine Gewichtseinsparung erreicht wird.

Bevorzugt haben die Ringe oder Scheiben der Stellrahmen Durchgänge oder Radiallanglöcher, durch die sich jeweils ein Stab oder mehrere Stäbe eines benachbarten Stellrahmens oder mehrerer benachbarter Stellrahmen erstrecken, wodurch die Relativbewegung der Stellrahmen zueinander ermöglicht wird.

Bevorzugt sind die geschachtelten Stellhülsen oder Stellrahmen jeweils mit einem Pendelrad gekoppelt, das über einen Seil- , Riemen- oder Kettenantrieb mit der jeweils zugeordneten Drehfläche gekoppelt ist. Durch die Verwendung von z.B. Keilriemen können im Vergleich zu Zahnrädern Gewicht und Kosten eingespart werden.

Die Rotationsvorrichtung der vorliegenden Erfindung kann z.B. als Windkraftrad, Turbine, Propeller, Gezeitenkraftwerk oder Schiffsschraube verwendet werden.

Weitere vorteilhafte Weiterbildungen der Erfindung sind den Unteransprüchen zu entnehmen.

Weiter Vorteile, vorteilhafte Weiterbildungen und Anwendungsmöglichkeiten der vorliegenden Erfindung sind der nachfolgenden, detaillierten Beschreibung beispielhafter, bevorzugter Ausführungsformen der Erfindung in Verbindung mit den Zeichnungen zu entnehmen. Es zeigen:
- Fig. 1: eine detailreiche Schnittansicht einer bekannten Rotationsvorrichtung;
- Fig. 2: eine schematische Teilansicht mit geschachtelten Stellhülsen einer ersten bevorzugten Ausführungsform der Rotationsvorrichtung der Erfindung gemäß Fig. 3;
- Fig. 3: eine seitliche Teilschnittansicht der ersten bevorzugten und beispielhaften Ausführungsform der Rotationsvorrichtung der Erfindung;
- Fig. 4: eine Teilansicht von Fig. 3;
- Fig. 5: eine Ansicht der Ausführungsform von Fig. 3 in Rich- tung des Pfeiles V von Fig. 3 bzw. Fig. 4 gesehen;
- Fig. 6: eine Seitliche Ansicht einer zweiten bevorzugten Aus- führungsform der Erfindung;
- Fig. 7: eine Ansicht der zweiten Ausführungsform von Fig. 6 in Richtung des Pfeiles VII von Fig. 6 gesehen;
- Fig. 8: eine perspektivische, teilweise ausgeschnittene Teil- ansicht eines Abschnitts mit geschachtelten Stellrah- men der zweiten Ausführungsform der Erfindung von Fig. 6;
- Fig. 9: eine Detailansicht der Fig. 8 mit einer inneren Schei- be eines inneren Stellrahmens;
- Fig. 10: eine herausgeschnittene Detailansicht der Fig. 8 mit einer mittleren Scheibe eines mittleren Stellrahmens;
- Fig. 11: eine herausgeschnittene Detailansicht der Fig. 8 mit einer äußeren Scheibe eines äußeren Stellrahmens;
- Fig. 12: eine seitliche Schnittansicht der Detailansicht von Fig. 8;
- Fig. 13: eine Draufsicht auf die Detailansicht von Fig. 12 in Richtung des Pfeiles XIII von Fig. 12 gesehen;
- Fig. 14: eine schematische Teilansicht mit geschachtelten Stellhülsen einer dritten, bevorzugten Ausführungsform der Rotationsvorrichtung der Erfindung;
- Fig. 15: eine schematische Teilansicht mit geschachtelten Stellhülsen einer vierten, bevorzugten Ausführungsform der Rotationsvorrichtung der Erfindung; und
- Fig. 16: eine schematische Teilansicht mit vier geschachtel- ten Stellhülsen einer fünften, bevorzugten Ausfüh- rungsform der Rotationsvorrichtung der Erfindung.

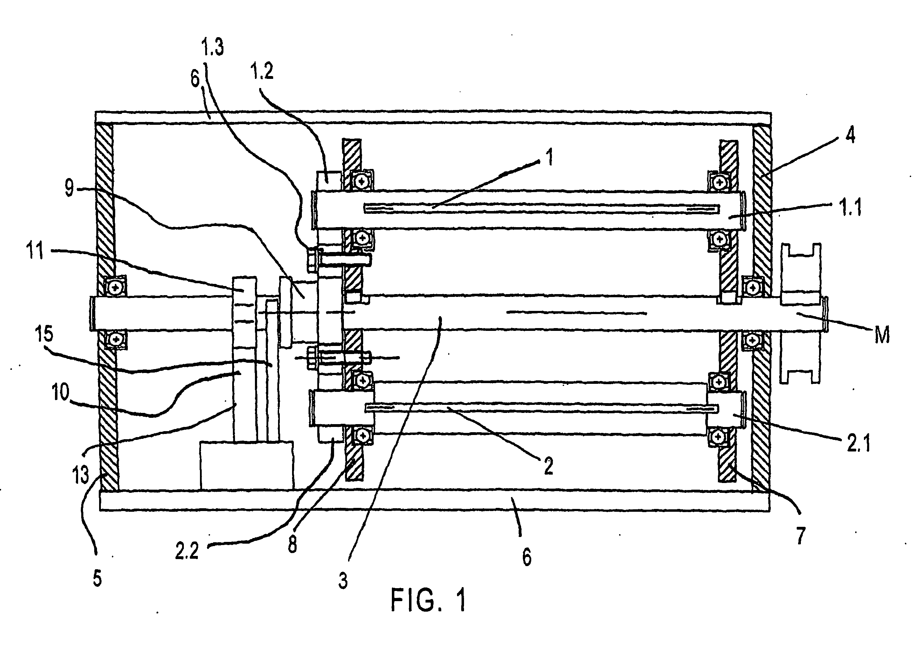

Fig. 1 zeigt eine detailreiche Schnittansicht einer Rotationsvorrichtung, die aus WO 2007/082506 A2 bekannt ist, deren Inhalt hier vollständig durch Bezugnahme aufgenommen wird. Gemäß Fig. 1 ist eine Hauptdreheinrichtung 3 bzw. ein Hauptdrehkörper der bekannten Rotationsvorrichtung zwischen zwei, stationäre, miteinander durch Stege 6 verbundene Stützwangen 4 und 5 drehbar um eine zentrale Drehachse M bzw. durchgehende Zentralwelle der Rotationsvorrichtung gelagert. Die Hauptdreheinrichtung 3 wird seitlich durch eine oder mehrere kreisflächige, zueinander beabstandete Rotationswangen 7 und 8 begrenzt, die mit der zentralen Drehachse M starr verbunden sind. In den Rotationswangen 7 und 8 sind eine Drehflächenachse 1.1 der Drehfläche 1 bzw. Flügels und eine Drehflächenachse 2.1 der Drehfläche 2 drehbar gelagert. Die Drehflächenachsen 1.1 und 2.1 sind parallel und mit Abstand zu der zentralen Drehachse M angeordnet und befinden sich eher an den Rändern der scheibenförmigen Rotationswangen 7 und 8.

Auf den Verlängerungen der Drehflächenachsen 1.1 und 2.1 sitzt ein Drehachsenzahnrad 1.2 bzw. eine Drehachsenzahnrad 2.2, die starr oder fest mit der zugeordneten Drehachse verbunden sind. Die Drehachsenzahnräder 1.2 und 2.2 sind jeweils über ein Zwischenzahnrad 1.3 mit einem Pendelzahnrad 9, das drehbar auf der Zentralachse M sitzt und eine Relativbewegung zu der Zentralachse M ausführen kann, im Verhältnis 1:1 gekoppelt. Das Pendelzahnrad 9 oder Pendelsteuerrad auf der zentralen Drehachse M ist somit nicht mit der Drehachse M in radialer Richtung starr verbunden.

Eine Verstellung, Drehung oder radiale Lage des Pendelzahnrads 9 wird durch eine Stelleinrichtung 10 oder Steuereinrichtung der Rotationsvorrichtung bestimmt. Die Stelleinrichtung 10 ist über das Pendelzahnrad 9, die Zwischenzahnräder 1.3 und Drehachsenzahnräder 1.1 bzw. 2.1 als Pendelantrieb mit den Drehflächen 1 bzw. 2 gekoppelt, um deren Winkelstellung bezüglich der Strömungsrichtung des Fluids einstellen zu können. Diese Verstellbewegung der Drehflächen 1 und 2 kann durch eine Pendelbewegung bzw. Hin-und-Her-Bewegung des Pendelzahnrads 9 durch z.B. ein mechanisches Kurvenelement oder durch einen elektrischen Antrieb erzeugt werden.

In einer bevorzugten Realisierung hat die Stelleinrichtung 10 eine Steuerkurve 11 mit einem Steuernocken, wobei die Steuerkurve 11 starr mit der zentralen Drehachse M verbunden ist. Weiterhin hat die Stelleinrichtung 10 eine hin-und-her bewegbare Pendelstange 13 mit einer Pendelrolle 14, die die Steuerkurve 11 abtastet. Die Bewegung der Steuerkurve wird über die Pendelstange 13 und ein Schubgestänge 15 auf das Pendelzahnrad 9 übertragen, wodurch die Winkelauslenkungsbewegung der Drehflächen 1 und 2 örtlich synchron gesteuert wird.

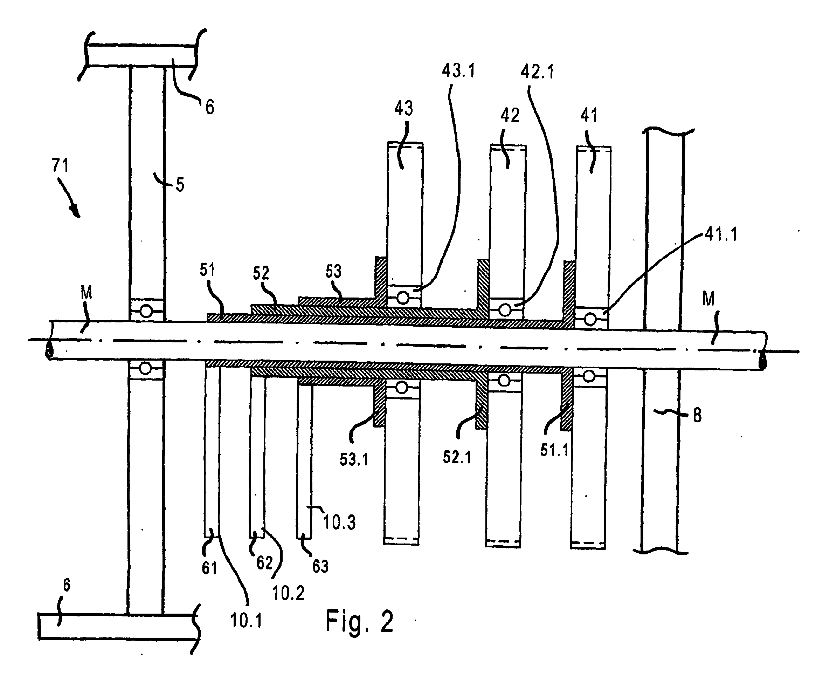

Nachfolgend wird eine erste, bevorzugte und beispielhafte Ausführungsform der Erfindung anhand von Fig. 2, Fig.3, Fig.4 und Fig. 5 beschrieben.

Die bevorzugte Rotationsvorrichtung 71 der Erfindung ist beispielhaft für die unabhängige Einstellung von drei Drehflächen bzw. Flügeln relativ zur Strömungsrichtung des Fluids ausgelegt und hat bis auf die Pendeleinrichtung zum voneinander unabhängigen Einstellen der Drehflächenstellung den gleichen Aufbau wie die Rotationsvorrichtung von Fig. 1. Gleiche Konstruktionselemente der beiden Rotationsvorrichtungen sind deshalb in den Figuren auch mit gleichen Bezugszeichen versehen.

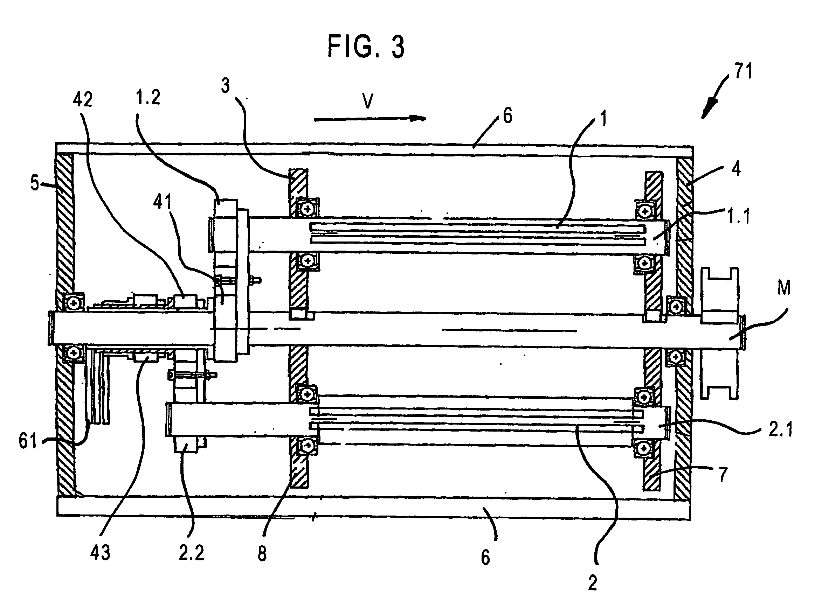

Fig. 3 zeigt eine seitliche, teilweise geschnittene Gesamtansicht einer ersten, bevorzugten Rotationsvorrichtung 71 der Erfindung, während Fig. 2 zur Verdeutlichung schematisch heraus gezeichnet den Abschnitt der Rotationsvorrichtung 71 zeigt, der insbesondere drei ineinander geschachtelte Stellhülsen 51, 52, 53 enthält.

Die Rotationsvorrichtung 71 hat wie die Rotationsvorrichtung von Fig. 1 eine Hauptdreheinrichtung 3, die zwischen zwei, stationär miteinander durch Stege 6 verbundene Stützwangen 4 und 5 drehbar um eine zentrale Drehachse M der Rotationsvorrichtung 71 gelagert ist, wobei sich die zentrale Drehachse M zwischen den Stützwangen 4, 5 durchgehend erstreckt. Die Hauptdreheinrichtung 3 wird auch hier seitlich durch eine oder mehrere kreisflächige, zueinander beabstandete Rotationswangen 7, 8 begrenzt, die mit der zentralen Drehachse M wie bei der Rotationsvorrichtung von Fig. 1 starr verbunden sind. In den Rotationswangen 7, 8 der Rotationsvorrichtung 71 der Erfindung sind jedoch äquidistant zueinander auf einer fiktiven Kreisbahn drei Drehflächenachse 1.1, 2.1, 3.1 bzw. Drehflächenwellen drehbar gelagert, die jeweils starr mit einer Drehfläche 1, 2 aus insgesamt drei Drehflächen verbunden sind, wobei die dritte Drehfläche in den Figuren nicht sichtbar ist. Die drei Drehflächenachsen 1.1, 2.1 und 3.1 sind auch in der Rotationsvorrichtung 71 parallel und mit Abstand zu der zentralen Drehachse M angeordnet und befinden sich eher an den Rändern des Paares von scheibenförmigen Rotationswangen 7, 8.

An den drei Drehflächenachsen 1.1, 2.1, 3.1 sitzt jeweils ein Drehachsenzahnrad 1.2, 2.2 bzw. 3.2, wobei die drei Drehachsenzahnräder 1.2, 2.2, 3.2 jeweils starr oder fest mit der zugeordneten Drehachse 1.1, 2.1 bzw. 3.1 verbunden sind.

Das erste Drehachsenzahnrad 2.1 der ersten Drehachse 1.1 entsprechend der ersten Drehfläche 1 ist in Eingriff mit einem ersten Pendelrad 41, z.B. einem Sektorenzahnrad, das wiederum fest mit einer ersten, relativ langgestreckten Stellhülse 51 verbunden ist. Die erste, innenliegende Stellhülse 51 ist um die Zentralachse M herum frei drehbar angeordnet und somit nicht mit dieser fest verbunden. Genauer hat die ersten Stellhülse 51 einen an ihrem Außenumfang sich erstreckenden, ringförmigen Flansch 51.1, der mit dem ersten Pendelrad 41 fest verbunden ist, das wiederum frei drehbar um die zentrale Drehachse M an der zentralen Drehachse M z.B. mit einem Wälzlager 41.1 bzw. Kugellager gelagert ist. Das erste Pendelrad 41 ist somit nicht mit der zentralen Drehachse M in radialer Richtung starr verbunden. Am anderen, flanschlosen Ende ist die erste Stellhülse 51 mit einem ersten Stellglied 61, z.B. einem Sektorenzahnrad, einer ersten Stelleinrichtung 10.1 starr verbunden, deren Aufbau z.B. der Stelleinrichtung 10 von Fig. 1 entspricht.

Eine Verstellung, Drehung oder radiale Lage des ersten Pendelrads 41 wird durch die erste Stelleinrichtung 10.1 oder Steuereinrichtung der Rotationsvorrichtung 71 bestimmt. Die erste Stelleinrichtung 10.1 ist über das erste Stellglied 61, die erste Stellhülse 51, das erste Pendelrad 41, ein Zwischenzahnrad 1.3, das Drehachsenzahnrad 1.2 und die Drehachsenzahnradachse 1.1 mit der ersten, starren Drehfläche 1 gekoppelt, um deren Winkelstellung bezüglich der Strömungsrichtung des Fluids einstellen zu können. Diese Verstellbewegung der Drehfläche 1 kann durch eine Pendelbewegung bzw. Hin-und-Her-Bewegung des ersten Pendelrads 41 durch z.B. ein mechanisches Kurvenelement 11 oder durch einen elektrischen Antrieb erzeugt werden.

In einer bevorzugten Realisierung hat die erste Stelleinrichtung 10.1 eine erste Steuerkurve mit einem Steuernocken, wobei die Steuerkurve starr mit der zentralen Drehachse M verbunden ist. Weiterhin hat die erste Stelleinrichtung 10.1 eine hin-und-her bewegbare Pendelstange 13 mit einer Pendelrolle 14, die die erste Steuerkurve abtastet. Die Bewegung der ersten Steuerkurve wird über die Pendelstange 13 und das Schubgestänge 15 (vergleiche Fig. 1) bzw. das Stellglied 61 via die Stellhülse 51 auf das erste Pendelrad 41 übertragen, wodurch die Winkelauslenkungsbewegung der ersten Drehfläche 1 gesteuert wird.

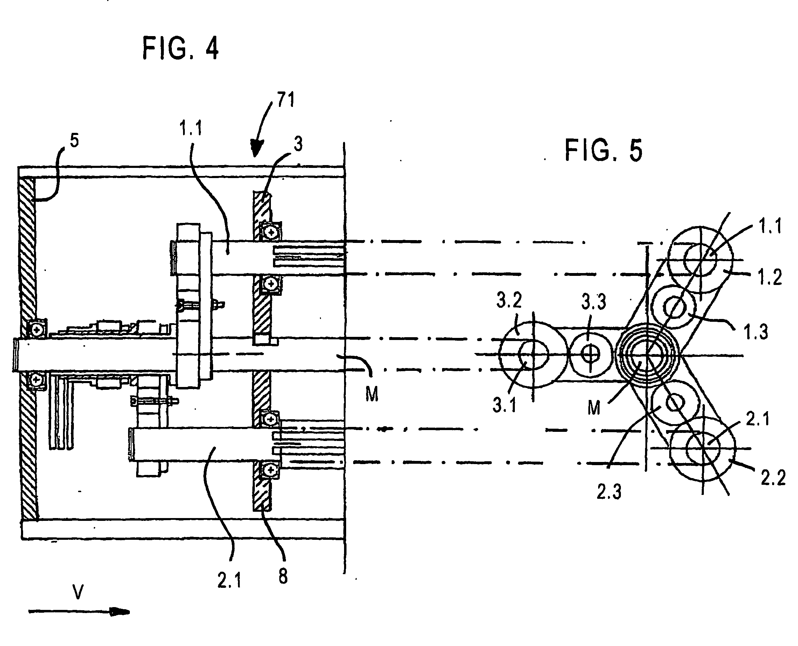

Das zweite Drehachsenzahnrad 2.2 der zweiten Drehachse 2.1 entsprechend der zweiten Drehfläche 2 ist über ein Zwischenzahnrad 2.3 (vergleiche insbesondere auch Fig. 4 und Fig. 5) mit einem zweiten Pendelrad 42 gekoppelt, das wiederum fest mit der zweiten, langgestreckten Stellhülse 52 endständig über einen an ihrem Außenumfang senkrecht abstehenden, ringförmigen Flansch 52.1 fest verbunden ist und das frei drehbar um die erste Stellhülse 51 an der ersten Stellhülse 51 z.B. wieder mit einem Wälzlager 42.1 bzw. Kugellager gelagert ist. Das zweite Pendelrad 42 ist somit nicht mit der ersten Stellhülse 51 in radialer Richtung starr verbunden. Die zweite Stellhülse 52 ist gegenüber der ersten Stellhülse 51 verkürzt. Die zweite, zwischenliegende Stellhülse 52 ist um die erste Stellhülse 51 herum frei drehbar angeordnet und somit nicht mit dieser fest verbunden. Am anderen, flanschlosen Ende ist die zweite Stellhülse 52 mit einem zweiten Stellglied 62 einer zweiten Stelleinrichtung 10.2 starr verbunden.

Eine Verstellung, Drehung oder radiale Lage des zweiten Pendelrads 42 wird durch die zweite Stelleinrichtung 10.2 oder Steuereinrichtung der Rotationsvorrichtung 71 bestimmt. Die zweite Stelleinrichtung 10.2, die in etwa den gleichen Aufbau und Funktion wie die erste Stelleinrichtung 10.1 oder 10 von Fig. 1 hat, ist über das zweite Stellglied 62, die zweite Stellhülse 52, das zweite Pendelrad 42, das Zwischenzahnrad 2.3, das Drehachsenzahnrad 2.2 und die Drehachse 2.1 mit der zweiten Drehfläche 2 gekoppelt, um deren Winkelstellung bezüglich der Strömungsrichtung des Fluids einstellen zu können. Diese Verstellbewegung der Drehfläche 2 kann durch eine Pendelbewegung bzw. Hin-und-Her-Bewegung des zweiten Pendelrads 42 durch z.B. ein mechanisches Kurvenelement der zweiten Stelleinrichtung 10.2 oder durch einen elektrischen Antrieb erzeugt werden.

In einer bevorzugten Realisierung hat die zweite Stelleinrichtung 10.2 eine zweite Steuerkurve 11, die unterschiedlich zu der ersten Steuerkurve 11 ausgebildet sein kann, mit einem Steuernocken, wobei die zweite Steuerkurve 11 starr mit der zentralen Drehachse M verbunden ist. Weiterhin hat die zweite Stelleinrichtung 10.2 eine hin-und-her bewegbare Pendelstange 13 mit einer Pendelrolle 14, die die zweite Steuerkurve 11 abtastet. Die Bewegung der zweiten Steuerkurve 11 wird über die Pendelstange 13 und ein Schubgestänge 15 bzw. das Stellglied 62 via der Stellhülse 52 auf das zweite Pendelrad 42 übertragen, wodurch die Winkelauslenkungsbewegung der zweiten Drehfläche 2 gesteuert wird.

Das dritte Drehachsenzahnrad 3.2 der dritten Drehachse 3.1 entsprechend der dritten Drehfläche ist mit einem dritten Pendelrad 43 gekoppelt, das wiederum fest mit einem endständigen Flansch 53.1 der dritten Stellhülse 53 starr verbunden ist. Auch die dritte, außenliegende Stellhülse 53 ist um den Außenumfang der zweiten Stellhülse 52 herum frei drehbar angeordnet und somit nicht mit dieser fest verbunden. Das dritte Pendelrad 43 ist frei drehbar um die zweite Stellhülse 52 an der zweiten Stellhülse 52 z.B. wieder mit einem Wälzlager 43.1 bzw. Kugellager gelagert. Das dritte Pendelrad 43 ist somit nicht mit der zweiten Stellhülse 52 in radialer Richtung starr verbunden. Die dritte Stellhülse 53 ist gegenüber der zweiten Stellhülse 52 kürzer ausgelegt. Die dritte, außenliegende Stellhülse 53 ist an ihrem flanschlosen, anderen Ende mit einem Stellglied 63 einer dritten Stelleinrichtung 10.3 starr gekoppelt.

Eine Verstellung, Drehung oder radiale Lage des dritten Pendelrads 43 wird durch die dritte Stelleinrichtung 10.3 oder Steuereinrichtung der Rotationsvorrichtung 71 bestimmt. Die dritte Stelleinrichtung 10.3, die in etwa den gleichen Aufbau und Funktion wie die erste und die zweite Stelleinrichtung 10.1, 10.2 hat, ist über das Stellglied 63, die Stellhülse 53, das dritte Pendelrad 43, das dritte Zwischenrad 3.3, das dritte Drehachsenzahnrad 3.2 und die Drehachse 3.1 mit der dritten Drehfläche gekoppelt, um deren Winkelstellung bezüglich der Strömungsrichtung des Fluids einstellen zu können. Diese Verstellbewegung der dritten Drehfläche kann durch eine Pendelbewegung bzw. Hin-und-Her-Bewegung des dritten Pendelrads 43 durch z.B. ein mechanisches Kurvenelement der dritten Stelleinrichtung 10.3 oder durch einen elektrischen Antrieb erzeugt werden.

In einer bevorzugten Realisierung hat auch die dritte Stelleinrichtung 10.3 eine dritte Steuerkurve 11, die unterschiedlich zu der ersten bzw. zweiten Steuerkurve 11 ausgebildet sein kann, mit einem Steuernocken, wobei die dritte Steuerkurve 11 starr mit der zentralen Drehachse M verbunden ist. Weiterhin hat die dritte Stelleinrichtung 10.3 eine hin-und-her bewegbare Pendelstange 13 mit einer Pendelrolle, die die dritte Steuerkurve 11 abtastet. Die Bewegung der dritten Steuerkurve wird über die Pendelstange 13 und ein Schubgestänge 15 bzw. das Stellglied 63 via die Stellhülse 53 auf das dritte Pendelrad 43 übertragen, wodurch die Winkelauslenkungsbewegung der dritten Drehfläche gesteuert wird.

Mit den drei soeben beschriebenen, geschachtelten Pendeleinrichtungen können somit die Stellungen von drei Drehflächen unabhängig voneinander eingestellt werden, um einen optimalen Wirkungsgrad der Rotationsvorrichtung erreichen zu können. Die Stellhülsen 51, 52 und 53 sind dabei in verschachtelter Weise frei drehbar um die Zentralachse M der Rotationsvorrichtung 71 herum angeordnet, wodurch ein kompakter Aufbau der Rotationsvorrichtung 71 erreicht wird. Der kompakte Aufbau stellt nur eine geringe Störung des strömenden Fluids dar und vermeidet Unwuchten bei der Drehung der Rotationsvorrichtung 71 der Erfindung.

Aus der Fig. 5 ist insbesondere ersichtlich, dass ein Winkel zwischen der Mittenlinie der Drehflächenachse 1.1 der Mittenlinie der zentralen Drehachse M und der Mittenlinie der Drehflächenachse 2.1 in der horizontalen Ebene 120° beträgt. Zudem beträgt auch der Winkel zwischen der Mittenlinie der Drehflächenachse 1.1, der Mittenlinie der zentralen Drehachse M und der Mittenlinie der Drehflächenachse 3.1 120°. Ein Winkel zwischen der Mittenlinie der Drehflächenachse 3.1, der Mittenlinie der zentralen Drehachse M und der Mittenlinie der Drehflächenachse 2.1 beträgt ebenfalls 120°.

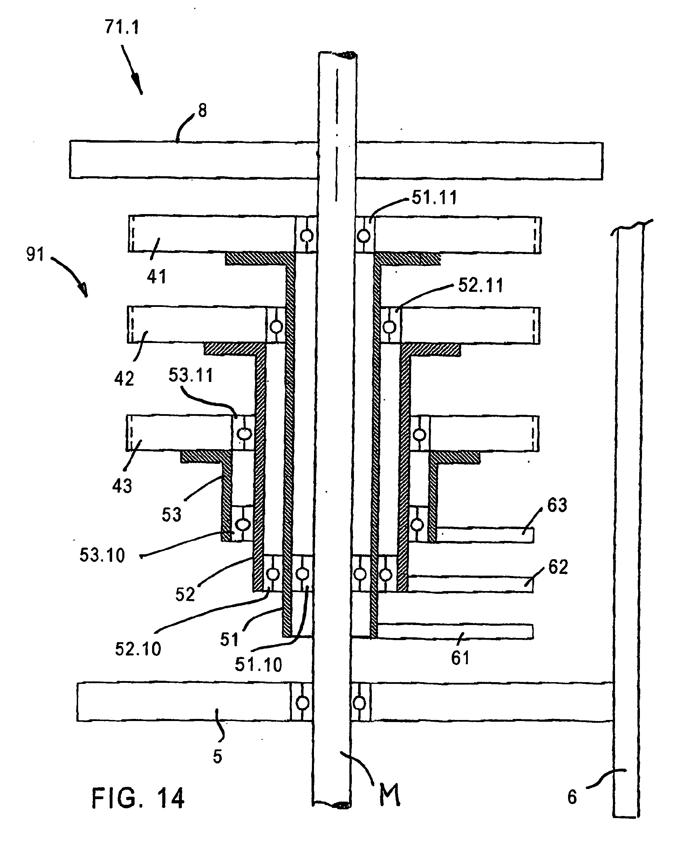

In Fig. 14 ist in einer seitlichen, schematischen, teilweise geschnittenen Teilansicht eine alternative, vierte Ausführungsform der Erfindung gezeigt, die sich gegenüber der Ausführungsform von Fig. 3 im wesentlichen durch einen modifizierten Aufbau der Pendeleinrichtung der Hauptdreheinrichtung 71 von Fig. 3 unterscheidet.

Eine Pendeleinrichtung 91 der Hauptdreheinrichtung 71.1 der Ausführungsform von Fig. 14 ist wiederum für den Antrieb von drei Drehflächen 1, 2 ausgelegt und hat somit eine innere Stellhülse 51, eine zwischenliegende bzw. mittlere Stellhülse 50 und eine äußere Stellhülse 53, ein erstes Pendelrad 41, das an die langgestreckte Stellhülse 51 angeflanscht ist, ein zweites Pendelrad 42, das an die Stellhülse 52 angeflanscht ist, und ein drittes Pendelrad 43, das an die Stellhülse 53 angeflanscht ist. Die innere Stellhülse 51 ist jedoch im Unterschied zu der Ausführungsform von Fig. 2 und 3 nicht direkt auf der zentralen Drehachse M drehbar gelagert, sondern mittels eines Wälzlagers 51.10 oder Kugellagers auf der Oberfläche bzw. dem Außenumfang der zentralen Drehachse M gelagert, wodurch zwischen der Innenseite der Stellhülse 51 und der Außenseite der zentralen Drehachse M ein Abstand eingehalten wird. Das Pendelrad 41 ist über ein weiteres Wälzlager 51.11 bzw. Kugellager an der zentralen Drehachse M gelagert, wodurch sich insgesamt eine Lagerung der Einheit aus Pendelrad 41, zugehöriger Stellhülse 51 und endständigem Stellglied 61 an der zentralen Drehachse M der Hauptdreheinrichtung 71.1 in den Bereichen der Enden der Stellhülse 51 durch die beiden Wälzlager 51.10 und 51.11 ergibt. Durch diese Anordnung lässt sich ein gleichmäßiger und reibungsärmerer Betrieb im Vergleich zu der Ausführungsform der Erfindung gemäß Fig. 2 erzeugen.

Die mittlere, zwischenliegende Stellhülse 52 ist mittels eines weiteren Wälzlagers 52.10 oder Kugellagers auf dem Außenumfang der Stellhülse 51 in Höhe des angekoppelten Stellglieds 62 gelagert. Die weitere Lagerung am gegenüberliegenden Ende der Stellhülse 52 wird wieder durch ein Wälzlager 52.11 erreicht, mit dem das Pendelrad 42 am Außenumfang der Stellhülse 51 gelagert ist, wobei das Pendelrad 52 wieder an die Stellhülse 52 fest angeflanscht ist. Auch hier ist durch die Lagerung wieder ein Abstand zwischen der Innenseite der Stellhülse 52 und dem Außenumfang bzw. der Außenseite der Stellhülse 51 gegeben, so dass eine reibungsarme Drehung der Stellhülse 52 um die Stellhülse 51 gegeben ist.

Die kürzeste Stellhülse 53 ist ähnlich mit einem weiteren Wälzlager 53.10 oder Kugellager an dem Außenumfang der Stell-hülse 52 in Höhe des Stellglieds 63, das mit der Stellhülse 53 fest verbunden ist, frei bewegbar um die Stellhülse 52 herum und damit um die zentrale Drehachse M herum gelagert. Zudem ist auch das Pendelrad 43 mittels eines weiteren Wälzlagers 53.11 oder Kugellagers auf dem Außenumfang der Pendelhülse 52 gelagert, wobei das Pendelrad 43 wieder fest und starr an der Stellhülse 53 angeflanscht ist. Auch zwischen dem Innenumfang der Stellhülse 53 und dem Außenumfang der Stellhülse 52 ist wiederum ein Abstand eingehalten.

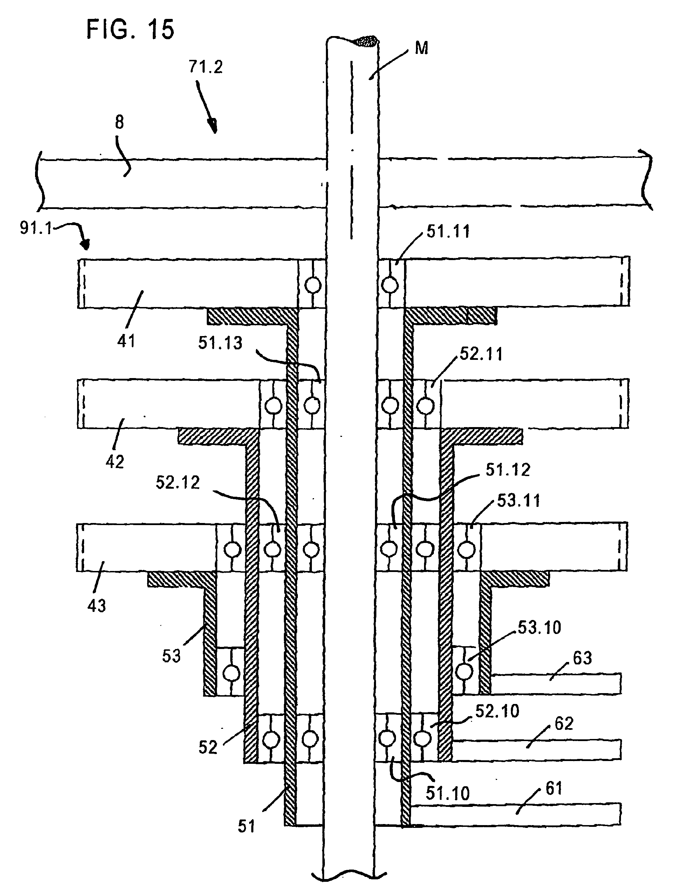

In der Fig. 15 wird eine weitere modifizierte Ausführungsform der Erfindung im wesentlichen mittels einer gegenüber der Ausführungsform von Fig. 14 modifizierten Pendeleinrichtung 91.1 einer Hauptdreheinrichtung 71.2 gezeigt. Die Pendeleinrichtung 91.1 hat wiederum drei Pendelräder 41, 42 und 43 zum Stellen von entsprechend drei Drehflächen, zugeordnete Stellhülsen 51, 52 und 53 und mit den Stellhülsen entsprechend starr verbundene Stellglieder 61, 62 und 63. Im Unterschied zur Ausführungsform von Fig. 14 sind jedoch die zusätzlichen Wälzlager 51.12, 51.13 und 52.12 vorhanden. Das Wälzlager 51.13 stützt die Stellhülse 51 auf Höhe des Pendelrads 42 zusätzlich gegen die zentrale Drehachse M ab. Das Wälzlager 51.12 stützt die innere Stellhülse 51 zusätzlich gegen die zentrale Drehachse M auf Höhe des Pendelrads 43 ab. Ähnlich stützt das zusätzliche Wälzlager 52.12 die Stellhülse 52 zusätzlich gegen die Stellhülse 51 ab. Damit ist ein Wälzlagersatz bestehend aus den Wälzlagern 51.12, 52.12 und 53.11 auf Höhe des Pendelrads 43 vorgesehen. Ein weiterer Wälzlagersatz bestehend aus den Wälzlagern 51.13 und 52.11 ist auf der Höhe des Pendelrads 42 vorgesehen. Durch die zusätzlichen Wälzlager 51.12, 52.12 und 51.13 wird einer zu starken Durchbiegung der Stellhülsen bei Belastung vorgebeugt.

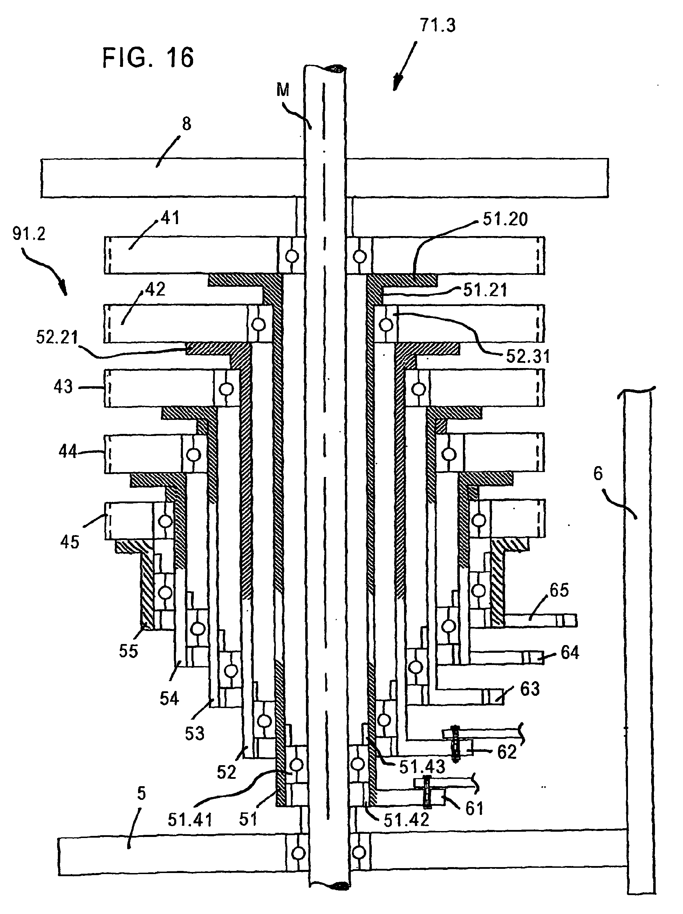

Fig. 16 zeigt eine weitere Ausführungsform der Erfindung in einer Teilansicht, die insbesondere eine Pendeleinrichtung 91.2 einer Hauptdreheinrichtung 71.3 zeigt, die hier insgesamt für fünf Drehflächen oder Flügel ausgelegt ist. Die Pendeleinrichtung 91.2 hat somit einen Pendelradsatz mit den Pendelrädern 41, 42, 43, 44, 45, entsprechend zugeordnete Stellhülsen 51, 52, 53, 54, 55 und wiederum entsprechend zugeordnete Stellglieder 61, 62, 63, 64, 65.

Das Pendelrad 41 ist an einem endständigen Flansch 51.20 mit der zugeordneten Stellhülse 51 starr und fest verbunden. Der Flansch 51.20 hat jedoch im Unterschied zu den Ausführungsformen von Fig. 14 und 15 eine zusätzliche Ringstufe 51.21, durch die ein benachbartes Wälzlager, hier z.B. das Wälzlager 52.31, in seiner Position vertikal festgelegt ist bzw. anschlägt. Das Wälzlager 52.31 wird weiterhin durch den angrenzenden Flansch 52.21 in seiner Vertikalposition festgelegt. Weiterhin sind an den Innenumfängen der rohrförmigen Stellhülsen an bestimmten vertikalen Positionen Vorsprünge oder Halteringe vorgesehen, die die Vertikalposition der angrenzenden Wälzlager festlegen. So ist z.B. das Wälzlager oder Kugellager 51.41 durch die Halteringe 51.42 und 51.43 in seiner Vertikalposition an der zentralen Drehachse M festgelegt und gehalten. Die anderen Flansche der Stellhülsen 52, 53 und 54 sind ähnlich oder identisch zu dem Flansch 51.20 auch mit einer Stufe 51.21 versehen.

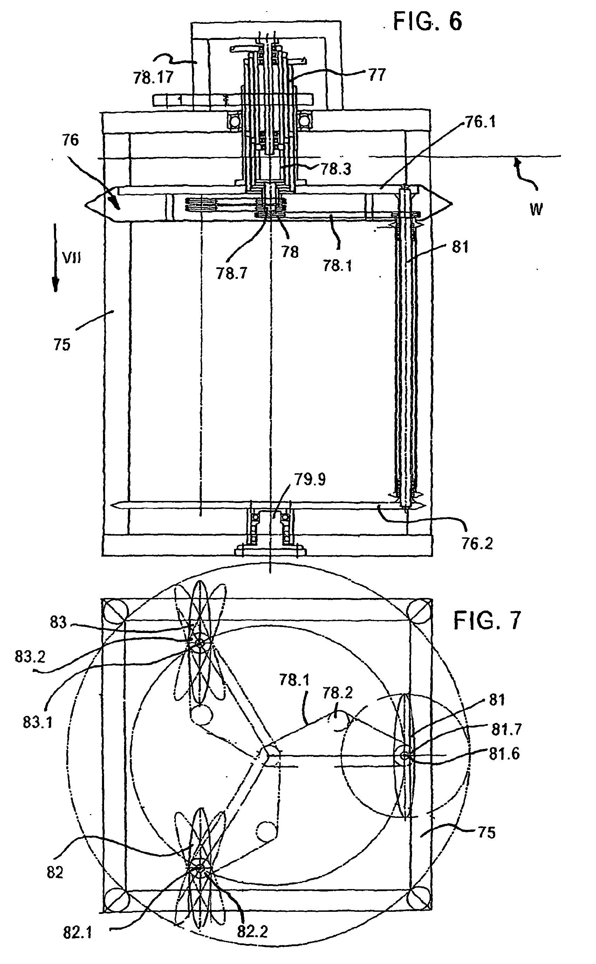

In Fig. 6, 7, 8, 9, 10, 11, 12 und 13 ist eine weitere, beispielhafte Ausführungsform der vorliegenden Erfindung gezeigt und erläutert. Diese Rotationsvorrichtung hat einen stationären Rahmen 75, in dem eine Hauptdreheinrichtung 76 der Rotationsvorrichtung drehbar gelagert ist.

Die Hauptdreheinrichtung 76 hat wiederum eine Pendeleinrichtung 77, Rotationswangen 76.1 und 76.2, drei Drehflächen 81, 82, 83, zugehörige Drehflächenachsen 81.6, 82.1, 83.1, entsprechende Drehachsenräder 81.7, 82.2 und 83.2, die mit den zugeordneten Drehachsen starr verbunden sind. Die Drehachsen 81.6, 82.1 und 83.1 erstrecken sich zwischen den Rotationswangen 76.1 und 76.2, die parallel zueinander sind, die senkrecht zu den parallelen Mittenlinien der Drehachsen stehen und in denen die Drehachsen drehbar gelagert sind. Durch ein Drehen der Drehachsenräder 81.7, 82.2 und 83.2 kann die Winkelstellung der entsprechenden Drehflächen 81, 82 und 83 zur Strömungsrichtung des Fluids wiederum optimal entlang einer Kreisbahn der Drehflächen 81, 82 und 83 eingestellt werden. Die Pendeleinrichtung 77 ist somit wieder für drei Drehflächen 81, 82 und 83 ausgelegt.

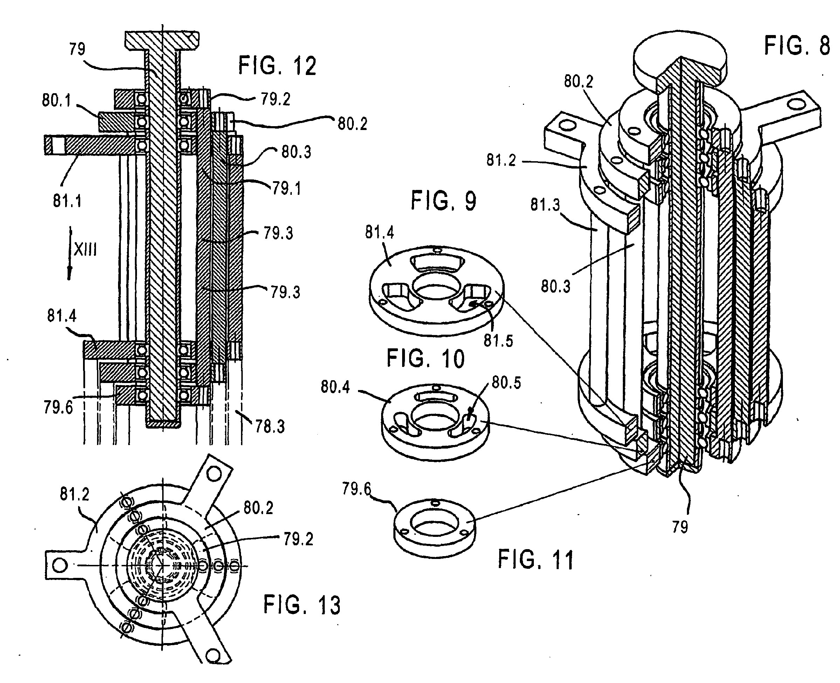

Die Pendeleinrichtung 77 ist in dieser Ausführungsform beispielhaft zum individuellen Einstellen oder Drehauslenken der drei Drehflächen 81, 82 und 83 aufgebaut. Wie insbesondere der perspektivischen Detailansicht von Fig. 8 und der zugehörigen Schnittansicht von Fig. 12 zu entnehmen ist, weist die Pendeleinrichtung 77 einen geschachtelten und damit kompakten Aufbau um eine Zentralachse 79 auf. An der Zentralachse 79 sind drei langgestreckte Stellrahmen 79.1, 80.1, 81.1 jeweils endständig mit entsprechenden Wälzlagern bzw. Kugellagern gelagert, die ineinander verschachtelt frei drehbar um die Zentralachse 79 herum zumindest für vorgegebene Winkel unabhängig voneinander und von der Zentralachse 79 um deren Mittensymmetrielinie herum drehbar sind. Der innere, erste Stellrahmen 79.1 hat einen oberen Stellring 79.2 oder Scheibe, der z.B. mit der Stelleinrichtung 10 von Fig. 1 gekoppelt ist, einen Zwischenring 79.6 oder Zwischenscheibe und z.B. drei winkelmäßig äquidistant zueinander angeordnete Stäbe 79.7 mit einem kreisförmigen Querschnitt, die sich zwischen dem Stellring 79.2 und dem Zwischenring 79.6 erstrecken. Um den ersten Stellrahmen 79.1 herum ist ein zweiter, mittlerer Stellrahmen 80.1 angeordnet, der wiederum einen an der Zentralachse 79 unterhalb des Stellrings 79.2 gelagerten Stellring 80.2, der z.B. mit einer weiteren Stelleinrichtung 10 an dem gezeigten Fortsatz gekoppelt ist, einen Zwischenring 80.4 und drei Stäbe 80.3 hat, die sich wiederum senkrecht und äquidistant parallel zueinander zwischen dem Stellring 80.1 und dem Zwischenring 80.4 erstrecken. Ein dritter, äußerer Stellrahmen 81.1 ist um den mittleren Stellrahmen 80.1 herum frei drehbar an der Zentralachse 79 gelagert und hat einen Stellring 81.2, der z.B. mit einer weiteren Stelleinrichtung 10 an einem gezeigten Fortsatz gekoppelt ist, einen unten liegenden Zwischenring 81.4 und drei identisch aufgebaute, parallele Stäbe 81.3, die sich zwischen dem Stellring 81.2 und dem Zwischenring 81.4 erstrecken, mit diesen fest und starr verbunden sind und äquidistant zueinander angeordnet sind. Die Mittensymmetrielinien aller Stäbe der drei Stellrahmen erstrecken sich parallel zur Mittensymmetrielinie der zentralen Drehachse 79.

Der Zwischenring 80.4 des Stellrahmens 80.1 weist drei durchgehende Radiallanglöcher 80.5 als Durchgänge auf. Durch jedes dieser Radiallanglöcher 80.5 erstreckt sich jeweils einer der Stäbe 79.3 des inneren, ersten Stellrahmens 79.1. Die Radiallanglöcher 80.5 ermöglichen somit eine Drehbewegung des Stellrahmens 79.1. Ebenso hat der Zwischenring 81.4 des Stellrahmens 80.1 drei identisch aufgebaute Radiallanglöcher 81.5, die durch den Zwischenring 81.4 hindurch gehen. Durch jedes Radiallangloch 81.5 geht jeweils ein Stab 80.3 des mittleren Stellrahmens 80.1 und jeweils ein Stab 79.3 des inneren, ersten Stellrahmens 79.1 hindurch, um die Drehbewegung bzw. den Drehausschlag der benachbarten Stellrahmen 79.1 und 80.1 zu ermöglichen. Auch der Stellring 81.2 des Stellrahmens 81.1 hat Radiallanglöcher (nicht gezeigt), die den Radiallanglöchern 81.5 des Zwischenrings 81.4 des Stellrahmens 81.1 entsprechen. Ebenso hat der Stellring 80.2 des Stellrahmens 80.1 Radiallanglöcher, die den Radiallanglöchern 80.5 des Zwischenrings 80.4 des Stellrahmens 80.1 entsprechen.

Unterhalb der Zwischenringe 79.6, 80.4, 81.4, die an der Zentralachse 79 per Wälzlager gelagert sind, sind die drei Stellrahmen 79.1, 80.1, 81.1 verlängert und gehen in entsprechend drei Stellhülsen oder Rahmenverlängerungen 78.3 über, an denen endständig jeweils ein Pendelrad 78 vorgesehen ist und die um eine weitere Achse 78.7 herum bzw. um geschachtelte Stellhülsen 78.3 entsprechender Anzahl frei drehbar angeordnet sind. Jedes der Pendelräder 78 ist über einen Zahnriemen 78.1, einen Riemen, eine Kette oder ein Seil mit dem zugeordneten Drehachsenrad 81.7, 82.2, 83.2 gekoppelt, um die jeweils zugeordnete Drehachse 81.6, 82.1, 83.1 drehen und damit den Winkel der an der Drehachse befindlichen Drehfläche 81, 82, 83 einstellen zu können.

Beispielhaft soll nachfolgend einer der drei Antriebe beschrieben werden, um das Funktionsprinzip zu erläutern. Zum Beispiel wird die von der Stelleinrichtung 10 erzeugte Steuerbewegung auf den Stellrahmen 79.1 übertragen, da die Stelleinrichtung 10 mit einem Fortsatz des zugehörigen Stellrings 79.2 kraftschlüssig gekoppelt ist. Eine Drehung des Stellrahmens 79.1 um die Zentralachse 79 herum wird von dem Stellrahmen 79.1, d.h. über den Stellring 79.2, die Stäbe 79.3 und den Zwischenring 79.6, auf eine Stellhülse 78.3 übertragen, wobei sich die Stäbe 79.3 in den Radiallanglöchern 80.5 des Zwischenrings 80.4 und in den Radiallöchern 81.5 des Zwischenrings 81.4 radial gesehen bewegen. Von der Stellhülse 78.3 wird die Drehbewegung auf das frei drehbare Pendelrad 78 übertragen, das wiederum über den Zahnriemen 78.1 mit dem Drehachsenrad 81.7 der Drehachse 81.6 gekoppelt ist, wobei sich der Zahnriemen 78.1 in einer Endlosschleife um das Pendelrad 78, das Drehachsenrad 81.7 und eine Umlenkrolle 78.2 erstreckt. Durch die Bewegung des Zahnriemens 78.1 wird das Drehachsenrad 81.7 und damit auch die Drehachse 81.6 verstellt, wodurch die Drehfläche 81 ihre Winkelstellung bezüglich der Strömungsrichtung des Fluids entsprechend ändert.

Die unabhängigen Antriebe der Drehflächen 82 und 83 sind analog zum gerade erläuterten und beschriebenen Antrieb der Drehfläche 81 ausgelegt und aufgebaut. Wie insbesondere aus Fig. 7 ersichtlich ist, sind die Mittenlinien der Drehachsen 81.6, 82.1 und 83.1 bei ihrer Bewegung auf der gleichen Kreislinie angeordnet, wobei ein Winkel zwischen jeweils zwei aufeinander folgenden Mittenlinien der Drehachsen 120° beträgt.

Es sei noch erwähnt, dass die untere Rotationswange 76.2 an einem Achsstumpf 79.9 drehbar gelagert ist, der wiederum starr mit dem stationären Rahmen 75 der in Fig. 6 gezeigten Rotationsvorrichtung der Erfindung gekoppelt ist. Des weiteren sei noch erläutert, dass der Abschnitt der Pendeleinrichtung 77, wie er in Fig. 8 gezeigt ist, durch ein Gehäuse 78.17 gekapselt ist und im wesentlichen oberhalb z.B. einer Wasseroberfläche angeordnet ist, die durch die Linie W in Fig. 6 angedeutet ist.

Es wird darauf hingewiesen, dass die Merkmale und Prinzipien der vorstehend beschriebenen, erläuterten und in den Figuren gezeigten Ausführungsformen je nach Bedarf miteinander kombiniert werden können. Insbesondere können zum Beispiel die beschriebenen und gezeigten Merkmale der Ausführungsformen von Fig. 14, Fig. 15 und Fig. 16 miteinander kombiniert werden oder auch in der Ausführungsform der Erfindung gemäß Fig. 3 verwendet werden.

## Patentansprüche

1. Rotationsvorrichtung zur Verwendung in einem Fluid, um Energie aus der Strömungsbewegung eines Fluids zu gewinnen oder um Energie in eine Bewegung eines Fluids umzuwandeln, mit einer Hauptdreheinrichtung, die mit einer zentralen Drehachse (M) der Rotationsvorrichtung (71) fest verbunden ist, ein oder mehreren Drehflächen, die drehbar um ihre Drehflächenachsen mit Abstand zu der zentralen Drehachse (M) derart an dem Hauptdreheinrichtung angebracht sind, dass die Hauptdreheinrichtung durch die eine Drehfläche bzw. durch mehrere Drehflächen eine Drehbewegung um die zentrale Drehachse (M) ausführen kann, wobei sich die Drehflächenachsen parallel zu der Achse des Hauptkörpers erstrecken,
**gekennzeichnet durch**
eine Pendeleinrichtung bzw. Steuereinrichtung zum Steuern oder Einstellen der Stellung der Drehfläche oder Drehflächen relativ zu einer Strömungsrichtung des Fluids, die für jede Drehfläche eine Stellhülse (51, 52, 53) und/oder einen Stellrahmen (79.1, 80.1, 81.1) hat, wobei die Stellhülse oder der Stellrahmen um die zentrale Drehachse (M) herum frei drehbar angeordnet ist, aber nicht starr oder kraftschlüssig mit der zentralen Drehachse (M) radial verbunden ist, und mit der zugeordneten Drehfläche gekoppelt ist, um ihre Pendelbewegung auf die Drehfläche zum Einstellen der Drehfläche zu übertragen.

2. Rotationsvorrichtung nach Anspruch 1, **dadurch gekennzeichnet, dass** die Pendeleinrichtung einen Steuernocken hat, der fest mit der zentralen Drehachse (M) der Hauptdreheinrichtung und der Stellhülse (51, 52, 53) oder dem Stellrahmen (79.1, 80.1, 81.1) gekoppelt ist und seine Bewegung in eine Drehbewegung der zugeordneten Drehfläche überträgt.

3. Rotationsvorrichtung nach Anspruch 1 oder Anspruch 2, **dadurch gekennzeichnet, dass** die Pendeleinrichtung einen elektrischen Antrieb hat, der in Abhängigkeit von der Drehposition der Hauptdreheinrichtung den Winkel der Drehfläche über die zugehörige Stellhülse oder den zugehörigen Stellrahmen einstellt.

4. Rotationsvorrichtung nach einem der vorstehenden Ansprüche, **dadurch gekennzeichnet, dass** die Pendeleinrichtung über die Stellhülse oder den Stellrahmen eine neutrale Stellung der zugeordneten Drehfläche bezüglich der Strömungsrichtung einstellt, in der die Drehfläche auf die Hauptdreheinrichtung kein Drehmoment ausübt.

5. Rotationsvorrichtung nach einem der vorstehenden Ansprüche, **gekennzeichnet durch** ein Pendelrad (41, 42, 43), das frei drehbar gelagert ist, aber nicht starr oder kraftschlüssig mit der zentralen Drehachse radial verbunden ist, und das über einen Antrieb oder ein Getriebe mit der zugeordneten Drehfläche gekoppelt ist.

6. Rotationsvorrichtung nach einem der vorstehenden Ansprüche, **dadurch gekennzeichnet, dass** die Pendeleinrichtung oder Stelleinrichtung eine Steuerkurve hat, die auf der zentralen Drehachse (M) vorgesehen ist.

7. Rotationsvorrichtung nach einem der vorstehenden Ansprüche, **dadurch gekennzeichnet, dass** mehrere Drehflächen (1,2) und gleichviele Stellhülsen (51, 52, 53) und/oder Stellrahmen (79.1, 80.1, 81.1) vorgesehen sind, wobei jeweils eine Drehfläche (1,2) mit einer jeweils zugeordneten Stellhülse oder dem jeweils zugeordneten Stellrahmen gekoppelt ist.

8. Rotationsvorrichtung nach einem der vorstehenden Ansprüche, **dadurch gekennzeichnet, dass** mehrere Drehflächen und gleichviele Pendelräder (41, 42, 43) vorgesehen sind, wobei jeweils eine Drehfläche mit einem jeweils zugeordneten Pendelrad gekoppelt ist, und dass mehrere Drehflächen und gleichviele Stellglieder (61, 62, 63) vorgesehen sind, wobei jeweils eine Drehfläche mit einem jeweils zugeordneten Stellglied gekoppelt ist.

9. Rotationsvorrichtung nach einem der vorstehenden Ansprüche, **dadurch gekennzeichnet, dass** mehrere Drehflächen und gleichviele Steuerkurven vorgesehen sind, wobei jeweils eine Drehfläche mit einer jeweils zugeordneten Steuerkurve gekoppelt ist.

10. Rotationsvorrichtung nach einem der vorstehenden Ansprüche, **dadurch gekennzeichnet, dass** die vielzähligen Stellhülsen (51, 52, 53) oder Stellrahmen (79.1, 80.1, 81.1) ineinander verschachtelt um die zentrale Drehachse (M) herum angeordnet sind.

11. Rotationsvorrichtung nach einem der vorstehenden Ansprüche, **dadurch gekennzeichnet, dass** die Stellung der jeweiligen Drehfläche zur Strömungsrichtung des Mediums derart durch die Pendeleinrichtung bzw. Steuereinrichtung eingestellt wird, dass eine Relativgeschwindigkeit zwischen dem strömenden Fluid und der jeweiligen Drehfläche konstant oder auf der Umlaufbahn optimal eingestellt ist.

12. Rotationsvorrichtung nach einem der vorstehenden Ansprüche, **dadurch gekennzeichnet, dass** zwischen einer Stellhülse und der dazu benachbarten zentralen Drehachse (M) ein Abstand oder Freiraum eingehalten ist und dass zwischen benachbarten Stellhülsen ein Abstand oder Freiraum eingehalten ist.

13. Rotationsvorrichtung nach Anspruch 1, **dadurch gekennzeichnet, dass** der Stellrahmen (79.1, 80.1, 81.1) mehrere parallel zueinander angeordnete Ringe (79.2, 80.2, 81.2; 79.6, 80.4, 81.4) oder Scheiben und mehrere Stäbe (79.3, 80.3, 81.3) aufweist, die sich zwischen den Ringen oder Scheiben erstrecken.

14. Rotationsvorrichtung nach Anspruch 13, **dadurch gekennzeichnet, dass** Ringe (80.4, 81.4) oder Scheiben der Stellrahmen (79.1, 80.1, 81.1) Durchgänge oder Radiallanglöcher (80.5, 81.5) haben, durch die sich jeweils ein Stab oder mehrere Stäbe eines benachbarten Stellrahmens oder mehrerer benachbarter Stellrahmen (79.1, 80.1, 81.1) erstrecken.

15. Rotationsvorrichtung nach einem der vorstehenden Ansprüche, **dadurch gekennzeichnet, dass** die geschachtelten Stellhülsen oder Stellrahmen (79.1, 80.1, 81.1) jeweils mit einem Pendelrad (78) gekoppelt sind, das über einen Seil- , Riemenoder Kettenantrieb (78.1, 78.2) mit der jeweils zugeordneten Drehfläche (81) gekoppelt ist.

## Claims

1. Rotational device for use in a fluid to extract energy from a moving fluid stream or to convert energy into a motion of a fluid comprising
main rotating means which is fixedly connected to a central rotary shaft (M) of the rotational device (71),
one or more rotational surfaces coupled rotatable about their rotational surface shafts spaced away from the central rotary shaft (M) to the main rotating means such that the main rotating means can execute by at least one rotational surface or by a plurality of rotational surfaces a rotational motion about the central rotary shaft (M), the rotational surface shafts extending parallel to the central rotary shaft of the main rotating means, **characterized by**
pivoting means or controlling means being provided to control or adjust the position of the rotational surface(s) relative to a direction of the moving fluid stream, comprising a respective adjusting sleeve (51, 52, 53) and/or an adjusting frame (79.1, 80.1, 81.1) for each rotational surface, the adjusting sleeve and/or adjusting frame is arranged freely rotatable about the central rotary shaft (M), but it is not connected in fixed or force-fit manner to the central rotary shaft (M) radially, and being coupled to a respective rotational surface to transfer its pivoting movement to the rotational surface for adjusting the rotational surface.

2. Rotational device as set forth in claim 1, **characterized in that** the pivoting means comprise a controlling cam fixedly coupled to the central rotary shaft (M) of the main rotating means and to the adjusting sleeve (51, 52, 53) or the adjusting frame (79.1, 80.1, 81.1) and transferring its motion to a rotational motion of the related rotational surface.

3. Rotational device as set forth in claim 1 or claim 2, **characterized in that** the pivoting means comprises an electric drive for adjusting the angle of the rotational surface as a function of the rotational position of the main rotating means via the related adjusting sleeve or the related adjusting frame.

4. Rotational device as set forth in any of the preceding claims, **characterized in that** the pivoting means adjusts a neutral position of the corresponding rotational surface in relation to the direction of the fluid stream by means of the adjusting sleeve or the corresponding adjusting frame in which the rotational surface does not exert any torque on the main rotating means.

5. Rotational device as set forth in any of the preceding claims, **characterized by** a pivoting wheel (41, 42, 43) freely rotatable mounted, but not rigidly or positively connected radially to the central rotary shaft, and coupled to the rotational surface concerned via a drive or transmission.

6. Rotational device as set forth in any of the preceding claims, **characterized in that** the pivoting means or adjusting means comprises a controlling curve being provided on the central rotary shaft (M).

7. Rotational device as set forth in any of the preceding claims, **characterized in that** several rotational surfaces (1, 2) and adjusting sleeves (51, 52, 53) and/or adjusting frames (79.1, 80.1, 81.1) in equal number are provided, each rotational surface (1, 2) is coupled to a respective adjusting sleeve or respective adjusting frame.

8. Rotational device as set forth in any of the preceding claims, **characterized in that** several rotational surfaces and
pivoting wheels (41, 42, 43) of equal number are provided, each of the rotational surfaces is coupled to a respective pivoting wheel, and
that several rotational surfaces and adjusting members (61, 62, 63) in equal number are provided, each rotational surface is coupled to a respective adjusting member.

9. Rotational device as set forth in any of the preceding claims, **characterized in that** several rotational surfaces and controlling curves in equivalent number are provided, each of the rotational surfaces is coupled to a respective one of the controlling curves.

10. Rotational device as set forth in any of the preceding claims, **characterized in that** a plurality of adjusting sleeves (51, 52, 53) or adjusting frames (79.1, 80.1 81.1) are nested into each other and arranged around the central rotational shaft (M).

11. Rotational device as set forth in any of the preceding claims, **characterized in that** the position of the respective rotational surface to the flowing direction of fluid or medium is adjusted by means of the pivoting means or controlling means such that a relative velocity between the flowing fluid and the rotational surface concerned is constant or is optimally adjusted on a circular trajectory.

12. Rotational device as set forth in any of the preceding claims, **characterized in that** a distance or free space is maintained between an adjusting sleeve and the central rotary shaft (M) next to it, and that a distance or free space is maintained between adjusting sleeves being next to each other.

13. Rotational device as set forth in claim 1, **characterized in that** the adjusting frame (79.1, 80.1, 81.1) comprises several rings (79.2, 80.2, 81.2; 79.6, 80.4, 81.4) or discs arranged parallel to each other and several bars (79.3, 80.3, 81.3) extending between the rings or discs.

14. Rotational device as set forth in claim 13, **characterized in that** the rings (80.4, 81.4) or discs of the adjusting frames (79.1, 80.1, 81.1) comprise openings or radial elongated holes (80.5, 81.5) through which a respective bar or several bars of an adjusting frame arranged next or of several adjusting frames (79.1, 80.1, 81.1) arranged next extends or extend.

15. Rotational device as set forth in any of the preceding claims, **characterized in that** the nested adjusting sleeves or adjusting frames (79.1, 80.1, 81.1) are coupled to a respective pivoting wheel (78) being coupled to the corresponding rotational surface (81) via a rope, belt, or chain drive (78.1, 78.2).

## Revendications

1. Dispositif de mise en rotation à utiliser dans un fluide pour récupérer de l'énergie à partir du mouvement d'écoulement d'un fluide ou bien pour transformer de l'énergie en un mouvement d'un fluide, comprenant un mécanisme rotatif principal qui est relié à demeure à un axe de rotation central (M) du dispositif de mise en rotation (71), une ou plusieurs surfaces rotatives qui sont appliquées en rotation autour de leurs axes de surfaces rotatives à distance de l'axe de rotation central (M) sur le mécanisme rotatif principal de telle sorte que le mécanisme rotatif principal est à même d'effectuer, via la surface rotative en question, respectivement via plusieurs surfaces rotatives, un mouvement rotatif autour de l'axe de rotation central (M), les axes des surfaces rotatives s'étendant parallèlement à l'axe du corps principal,
**caractérisé par**
un mécanisme oscillant respectivement un mécanisme de commande pour la commande ou le réglage de la position de la surface rotative ou des surfaces rotatives par rapport à une direction d'écoulement du fluide, qui possède, pour chaque surface rotative, un manchon de réglage (51, 52, 53) et/ou un cadre de réglage (79.1, 80.1, 81.1), le manchon de réglage ou le cadre de réglage étant disposé en rotation libre autour de l'axe de rotation central (M), sans être soumis à une liaison radiale rigide ou mécanique avec l'axe de rotation central (M), et étant couplé avec la surface rotative correspondante pour transférer son mouvement oscillant à la surface rotative à des fins de réglage de la surface rotative.

2. Dispositif de mise en rotation selon la revendication 1, **caractérisé en ce que** le mécanisme oscillant possède une came radiale qui est couplée à demeure à l'axe de rotation central (M) du mécanisme rotatif principal et au manchon de réglage (51, 52, 53) ou au cadre de réglage (79.1, 80.1, 81.1) et traduit son mouvement en un mouvement rotatif de la surface rotative correspondante.

3. Dispositif de mise en rotation selon la revendication 1 ou 2, **caractérisé en ce que** le mécanisme oscillant possède une commande électrique qui règle, en fonction de la position en rotation du mécanisme rotatif principal, l'angle de la surface rotative via le manchon de réglage correspondant ou via le cadre de réglage correspondant.

4. Dispositif de mise en rotation selon l'une quelconque des revendications précédentes, **caractérisé en ce que** le mécanisme oscillant règle, via le manchon de réglage ou via le cadre de réglage, une position neutre de la surface rotative correspondante, par rapport à la direction d'écoulement, position dans laquelle la surface rotative n'exerce aucun couple de rotation sur le mécanisme rotatif principal.

5. Dispositif de mise en rotation selon l'une quelconque des revendications précédentes, **caractérisé par** une roue pendulaire (41, 42, 43) qui est montée en rotation libre, mais qui n'est pas soumise à une liaison radiale rigide ou mécanique avec l'axe de rotation central, et qui est couplée via une commande ou une transmission à la surface rotative correspondante.

6. Dispositif de mise en rotation selon l'une quelconque des revendications précédentes, **caractérisé en ce que** le mécanisme oscillant ou le mécanisme de réglage possède une came radiale qui est prévue sur l'axe de rotation central (M).

7. Dispositif de mise en rotation selon l'une quelconque des revendications précédentes, **caractérisé en ce que** l'on prévoit plusieurs surfaces rotatives (1, 2) et un même nombre de manchons de réglage (51, 52, 53) et/ou de cadres de réglage (79.1, 80.1, 81.1), une surface rotative respective (1, 2) étant couplée à un manchon qui lui est respectivement attribué ou bien au cadre de réglage qui lui est respectivement attribué.

8. Dispositif de mise en rotation selon l'une quelconque des revendications précédentes, **caractérisé en ce que** l'on prévoit plusieurs surfaces rotatives et un même nombre de roues pendulaires (41, 42, 43), une surface rotative respective étant couplée à une roue pendulaire qui lui est respectivement attribuée, et **en ce que** l'on prévoit plusieurs surfaces rotatives et un même nombre d'éléments de réglage (61, 62, 63), une surface rotative respective étant couplée à un élément de réglage qui lui est respectivement attribué.

9. Dispositif de mise en rotation selon l'une quelconque des revendications précédentes, **caractérisé en ce que** l'on prévoit plusieurs surfaces rotatives et un même nombre de cames radiales, une surface rotative respective étant couplée à une came radiale qui lui est respectivement attribuée.

10. Dispositif de mise en rotation selon l'une quelconque des revendications précédentes, **caractérisé en ce que** les nombreux manchons de réglage (51, 52, 53) ou les nombreux cadres de réglage (79.1, 80.1, 81.1) sont disposés autour de l'axe de rotation central (M) en étant encastrés les uns dans les autres.

11. Dispositif de mise en rotation selon l'une quelconque des revendications précédentes, **caractérisé en ce que** le réglage de la surface rotative respective par rapport à la direction d'écoulement du milieu est réalisé via le mécanisme oscillant respectivement le mécanisme de commande de telle sorte que l'on règle une vitesse relative entre le fluide qui s'écoule et la surface rotative respective pour obtenir une valeur constante ou une orbite optimale.

12. Dispositif de mise en rotation selon l'une quelconque des revendications précédentes, **caractérisé en ce que** l'on maintient, entre un manchon de réglage et la surface rotative centrale (M) qui lui est voisine, une distance ou un espace libre et **en ce que** l'on maintient entre des manchons de réglage voisin, une distance ou un espace libre.

13. Dispositif de mise en rotation selon la revendication 1, **caractérisé en ce que** le cadre de réglage (79.1, 80.1, 81.1) présente plusieurs anneaux (79.2, 80.2, 81.2 ; 79.6, 80.4, 81.4) ou plusieurs disques disposés parallèlement les uns aux autres, et plusieurs barres (79.3, 80.3, 81.3) qui s'étendent entre les anneaux ou les disques.

14. Dispositif de mise en rotation selon la revendication 13, **caractérisé en ce que** des anneaux (80.4, 81.4) ou des disques du cadre de réglage (79.1, 80.1, 81.1) possèdent des passages ou des trous oblongs radiaux (80.5, 81.5), à travers lesquels s'étend ou s'étendent respectivement une barre ou plusieurs barres d'un cadre de réglage voisin ou de plusieurs cadres de réglage voisins (79.1, 80.1, 81.1).

15. Dispositif de mise en rotation selon l'une quelconque des revendications précédentes, **caractérisé en ce que** les manchons de réglage ou les cadres de réglage (79.1, 80.1, 81.1) emboîtés les uns dans les autres sont couplés respectivement à une roue pendulaire (78) qui est couplée via une commande par câble, par courroie ou par chaîne (78.1, 78.2) à la surface rotative (81) qui leur est respectivement attribuée.
